# EUROPEAN PATENT SPECIFICATION

(11) **EP 3 039 664 B1**
(45) Date of publication and mention of the grant of the patent: **11.12.2019**
(21) Application number: 14759429.5
(22) Date of filing: 25.08.2014
(51) Int. Cl.: G08G 5/00

(54) **DISPLAY OF TERRAIN ALONG FLIGHT PATHS**
ANZEIGE DES GELÄNDES ENTLANG DER FLUGROUTEN
AFFICHAGE DU TERRAIN LE LONG DES TRAJECTOIRES DE VOL

(30) Priority: 30.08.2013 US 201361872325 P; 06.08.2014 US 201414453245
(43) Date of publication of application: 06.07.2016
(73) Proprietor: Insitu, Inc. (a Subsidiary Of The Boeing Company), Bingen, Washington 98605 (US)
(72) Inventor: HAYES, Andrew, Bingen, Washington 980605 (US)
(74) Representative: Hylarides, Paul Jacques
(86) International application number: PCT/US2014/052484
(87) International publication number: WO 2015/031238

(56) References cited:
- EP-A1- 1 598 641
- WO-A2-02/21229
- US-A1- 2004 160 341
- US-A1- 2007 174 005
- US-B1- 8 798 814

## Description

### BACKGROUND

The present application is generally related to displaying profiles of terrain along projected flight paths of aircraft.

Systems are know which display such profiles to pilots of manned aircraft. US 2007/0174005 discloses a display device which displays a 2D topographic map corresponding to terrain sections with mainly horizontal profile referenced with respect to an absolute altitude that is greater than that of the highest surrounding relief, which is termed the safety altitude MSA_{EDGE} and which is deduced from the minimum safety altitudes of the points of the zone of largest probability of the presence of the aircraft in the course of an emergency descent.

EP 1598641 A1 discloses a system comprising means for determining an auxiliary flight plan corresponding to a lateral revision of the current flight plan, at least over a section of the slight at a low altitude; means for automatically determining at least one decision point which indicates the last position of the air vehicle following the current flight plan where the auxiliary flight plan can still be activated, in order to allow the air vehicle to fly in all safety over a terrain by following the auxiliary flight plan in the same flight conditions as those for the current flight plan; means for displaying automatically at least the decision point to the pilot of the air vehicle; and actuating means allowing a pilot to activate the auxiliary flight plan to cause the lateral revision of the current flight plan.

Usage of unmanned aerial vehicles (UAVs) is becoming much more common. UAVs are used by many organizations, such as the military, law enforcement, and the like, and by individuals, such as UAV enthusiasts. Unlike pilots of manned aircraft, controllers of UAVs are not located inside of the aircraft that is being controlled. Controller inputs can be transmitted to UAVs in flight to control the direction of the UAV. However, a controller may not have the same awareness about the UAV and its surroundings as a pilot located in an aircraft may have. Controllers of UAVs may benefit from information presented in a way that gives them greater awareness of the UAV and its surroundings.

### SUMMARY

Illustrative examples of the present disclosure include, without limitation, methods, structures, and systems. The invention is defined in the appended claims.

In the invention the first line represents a minimum altitude and wherein the second line represents a safety altitude. In one example, the method can also include displaying a numerical command altitude indicator near the third line, where the numerical command indicator indicates the command altitude for the projected flight path. In another example, the method can include displaying a numerical altitude indicator near the first line, where the numerical altitude indicator indicating an altitude of the first line at a point along the projected flight path. In another example, the method can include displaying a fourth line representing an overall minimum altitude of the aircraft.

In another example, the method can also include receiving an input indicative of a movement of the third line in the display; changing the location of the third line in the display based on the input; and controlling a command altitude of the aircraft based on the input. In another example, the command line can include one or more waypoints and the method can also include receiving an input indicative of a movement of at least one of the one or more waypoints in the display, changing the location of the one or more waypoints in the display based on the input, and controlling a command altitude of the aircraft based on the input.

Other features of the methods, structures, and systems are described below. The features, functions, and advantages can be achieved independently in various examples or may be combined in yet other examples, further details of which can be seen with reference to the following description and drawings.

### BRIEF DESCRIPTION OF THE DRAWINGS

Throughout the drawings, reference numbers may be re-used to indicate correspondence between referenced elements. The drawings are provided to illustrate examples described herein and are not intended to limit the scope of the disclosure.
Figure 1 depicts a flow diagram of an aircraft production and service methodology.
Figure 2 depicts a block diagram of an aircraft.
Figure 3 depicts a block diagram illustrating systems or operating environments for controlling unmanned aerial vehicles (UAVs).
Figure 4 depicts an example of a display that can assist a UAV controller to understand the various altitude zones for the UAV flight and real-time information about the altitude of the UAV.
Figures 5A, 5B, and 5C depict an example of a display that can assist a UAV controller to understand the various altitude zones for the UAV flight, real-time information about the altitude of the UAV, and terrain surrounding the UAV.
Figure 6 depicts an example of a method of displaying a profile of terrain.
Figure 7 depicts an illustration of an example computing environment in which operations according to the disclosed subject matter may be performed.

### DETAILED DESCRIPTION

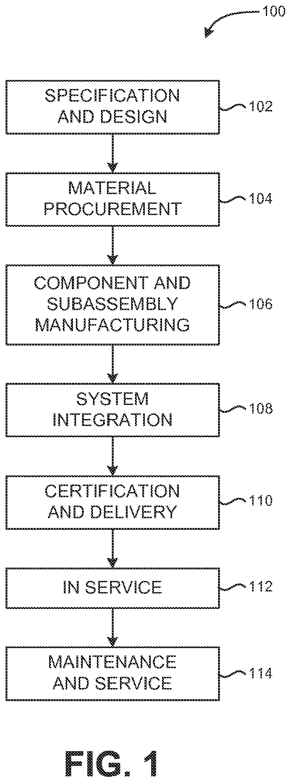

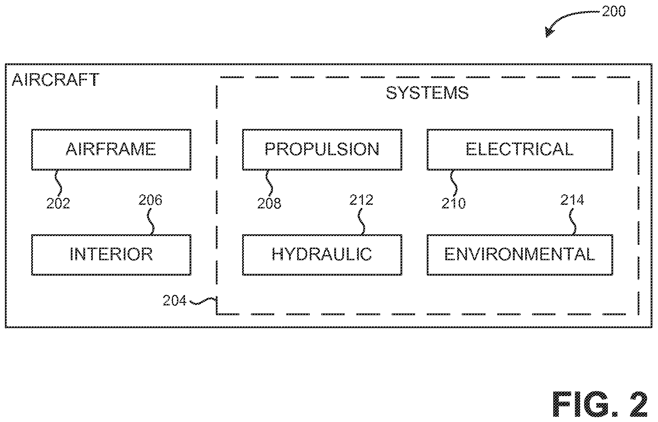

Examples in this disclosure may be described in the context of aircraft manufacturing and service method 100 as shown in Figure 1 and an aircraft 200 as shown in Figure 2. During pre-production, aircraft manufacturing and service method 100 may include specification and design 102 of aircraft 200 and material procurement 104.

During production, component and subassembly manufacturing 106 and system integration 108 of aircraft 200 takes place. Thereafter, aircraft 200 may go through certification and delivery 110 in order to be placed in service 112. While in service by a customer, aircraft 200 is scheduled for routine maintenance and service 114 (which may also include modification, reconfiguration, refurbishment, and so on).

Each of the processes of aircraft manufacturing and service method 100 may be performed or carried out by a system integrator, a third party, and/or an operator (e.g., a customer). For the purposes of this description, a system integrator may include, without limitation, any number of aircraft manufacturers and major-system subcontractors; a third party may include, for example, without limitation, any number of venders, subcontractors, and suppliers; and an operator may be an airline, leasing company, military entity, service organization, and so on.

As shown in Figure 2, aircraft 200 produced by aircraft manufacturing and service method 100 may include airframe 202 with a plurality of systems 204 and interior 206. Examples of systems 204 include one or more of propulsion system 208, electrical system 210, hydraulic system 212, and environmental system 214. Any number of other systems may be included in this example. Although an aerospace example is shown, the principles of the disclosure may be applied to other industries, such as the automotive industry.

Apparatus and methods embodied herein may be employed during any one or more of the stages of aircraft manufacturing and service method 100. For example, without limitation, components or subassemblies corresponding to component and subassembly manufacturing 106 may be fabricated or manufactured in a manner similar to components or subassemblies produced while aircraft 200 is in service.

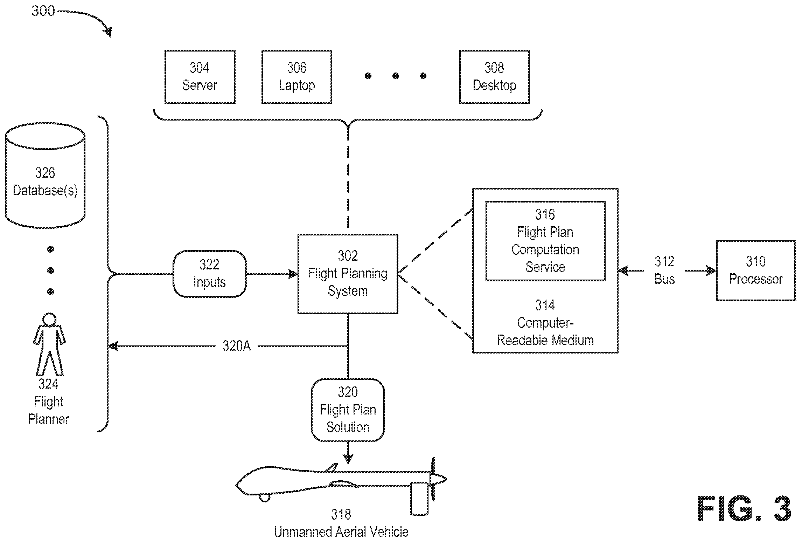

Figure 3 illustrates systems or operating environments, denoted generally at 300, that provide flight plans for UAVs while routing around obstacles having spatial and temporal dimensions. These systems 300 may include one or more flight planning systems 302. Figure 3 illustrates several examples of platforms that may host the flight planning system 302. These examples may include one or more server-based systems 304, one or more portable computing systems 306 (whether characterized as a laptop, notebook, tablet, or other type of mobile computing system), and/or one or more desktop computing systems 308. As detailed elsewhere herein, the flight planning system 302 may be a ground-based system that performs pre-flight planning and route analysis for the UAVs, or may be a vehicle-based system that is housed within the UAVs themselves.

Implementations of this description may include other types of platforms as well, with Figure 3 providing non-limiting examples. For example, the description herein contemplates other platforms for implementing the flight planning systems, including but not limited to wireless personal digital assistants, smartphones, or the like. The graphical elements used in Figure 3 to depict various components are chosen only to facilitate illustration, and not to limit possible implementations of the description herein.

Turning to the flight planning system 302 in more detail, it may include one or more processors 310, which may have a particular type or architecture, chosen as appropriate for particular implementations. The processors 310 may couple to one or more bus systems 312 that are chosen for compatibility with the processors 310.

The flight planning systems 302 may include one or more instances of computer-readable storage media 314, which couple to the bus systems 312. The bus systems may enable the processors 310 to read code and/or data to/from the computer-readable storage media 314. The media 314 may represent storage elements implemented using any suitable technology, including but not limited to semiconductors, magnetic materials, optics, or the like. The media 314 may include memory components, whether classified as RAM, ROM, flash, or other types, and may also represent hard disk drives.

The media 314 may include one or more modules 316 of instructions that, when loaded into the processor 310 and executed, cause the server 304 to provide flight plan computation services for a variety of UAVs 318. These modules may implement the various algorithms and models described and illustrated herein.

The UAVs 318 may be of any convenient size and/or type as appropriate for different applications. In different scenarios, the UAVs may range from relatively small drones to relatively large transport aircraft. Accordingly, the graphical illustration of the UAV 318 as shown in Figure 1 is representative only, and is not drawn to scale.

The flight plan services 316 may generate respective flight plan solutions 320 for the UAVs 318 based on inputs 322, with flight planning personnel 324 and/or one or more databases 326 providing inputs 322.

Assuming that the flight plan services 316 define one or more solutions 320, the flight planning system 302 may load the solutions into the UAVs 318, as represented by the arrow connecting blocks 302 and 318 in Figure 3. In addition, the flight planning system 302 may also provide the solutions 320 to the flight planner 324 and/or the databases 326, as denoted by the arrow 320A.

One difficulty with controlling UAVs is that a controller of a UAV is located remotely from the UAV and may not have the same awareness as a pilot has inside of an aircraft. Among a number of issues, the controller of a UAV may not have the ability to appreciate terrain surrounding the UAV. If the controller of the UAV cannot see the geographic area surrounding the UAV, the controller may inadvertently command the UAV to enter a dangerous area and/or crash into terrain.

One way to address the difficult with terrain is to establish specific altitude zones for a UAV flight. For example, a minimum altitude for the flight can be established. The minimum altitude can be a distance from mean sea level ("MSL") which is deemed to be the minimum desired operating altitude during the flight of the UAV. The minimum altitude can be based on the height of the highest expected terrain during the flight. The UAV may be below the minimum altitude during certain phases of a flight, such as takeoff, initial ascent, final decent, and landing. However, the minimum altitude may be used as a guide for a controller when operating the UAV. In another example a maximum altitude for the flight can be established. The maximum altitude can indicate a level above MSL which is deemed to be the maximum desired operating altitude during the flight of the UAV. The maximum altitude can be based on one of more of the following factors: the maximum designed operating altitude of the UAV, a level above which other air traffic is expected to be, airspace restrictions, and the like. In another example, a safe altitude for the flight can be established. The safe altitude may indicate a level above MSL which is greater than the minimum altitude and which represents an altitude that is deemed to be safe for operation of the UAV. The safe altitude may be determined based on a safety factor for avoiding terrain during the flight, based on an uncertainty of the level of terrain in the area of the flight of the UAV, and/or based on any other factor.

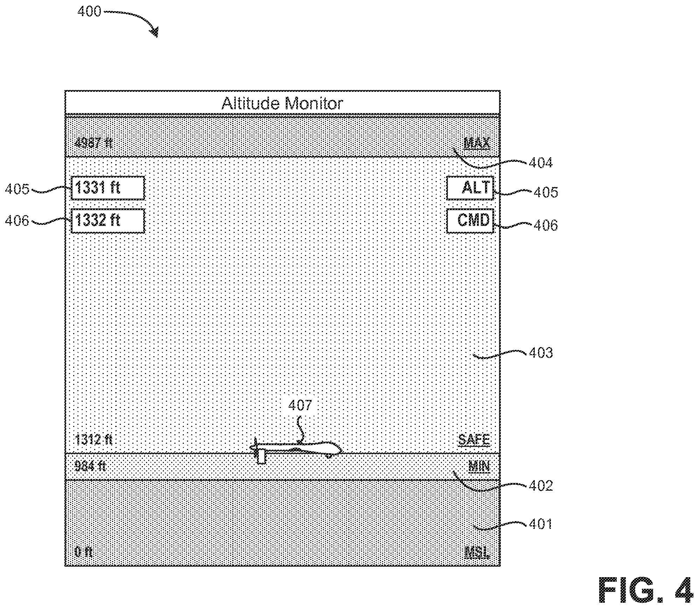

Figure 4 depicts an example of a display 400 that can assist a UAV controller to understand the various altitude zones for the UAV flight and real-time information about the altitude of the UAV. The display 400 can include a lower no-fly zone 401 located between MSL and a minimum altitude established for the flight. In Figure 4, the lower no-fly zone 401 includes an indication of "MSL" and the altitude (0 ft) associated with MSL. The display 400 can also include a minimum fly zone 402 located between the minimum altitude established for the flight and a safe altitude established for the flight. In Figure 4, the minimum fly zone 402 includes an indication of "MIN" and the particular minimum altitude (984 ft) for that particular flight. The display 400 can also include a safe fly zone 403 located between the safe altitude established for the flight and a maximum altitude established for the flight. In Figure 4, the safe fly zone 403 includes an indication of "SAFE" and the particular safe altitude (1312 ft) for that particular flight. The display 400 can also include an upper no-fly zone 404 located above the maximum altitude established for the flight. In Figure 4, the upper no-fly zone 404 includes an indication of "MAX" and the particular maximum altitude (4987 ft) for that particular flight. While the depiction in Figure 4 shows each of the lower no-fly zone 401, the minimum fly zone 402, the safe fly zone 403, and the upper no-fly zone 404 with a particular density of dots, the display 400 can fill each of the lower no-fly zone 401, the minimum fly zone 402, the safe fly zone 403, and the upper no-fly zone 404 with different colors. For example, the lower no-fly zone 401 can be colored red, the minimum fly zone 402 can be colored yellow, the safe fly zone 403 can be colored green or blue, and the upper no-fly zone 404 can be colored red. Many other color schemes are possible.

The display 400 depicted in Figure 4 also includes real-time information about the flight. The display 400 includes an indication of the current altitude 405 of the flight. In the particular example of Figure 4, the indication of the current altitude 405 includes a numerical indication ("1331 ft") on the left side of the display 400 and the term "ALT" on the right side of the display 400. The display 400 also includes an indication of the command altitude 406 of the flight. The command altitude can represent an altitude at which the UAV has been commanded to fly. The command altitude can differ from the actual altitude for a number of reasons. For example, the actual altitude can be different from the command altitude a time soon after the command altitude has been changed to a new command altitude and the UAV has not been able to properly adjust its altitude to the new command altitude. In another example, the actual altitude can be different from the command altitude if the UAV is permitted to vary from the command altitude by a certain amount, such as a few feet. In the particular example of Figure 4, the indication of the command altitude 406 includes a numerical indication ("1332 ft") on the left side of the display 400 and the term "CMD" on the right side of the display 400.

The display 400 can also include an icon 407 representing a location of the UAV within one of the lower no-fly zone 401, the minimum fly zone 402, the safe fly zone 403, or the upper no-fly zone 404. Depicting the icon 407 at the actual altitude of the UAV can aid the controller in understanding where the UAV is with respect to each of the minimum fly zone 402, the safe fly zone 403, or the upper no-fly zone 404. Having this understanding may assist the UAV controller in determining whether the UAV is flying at an appropriate altitude. However, such a depiction does not give the controller knowledge of the actual terrain surrounding the UAV.

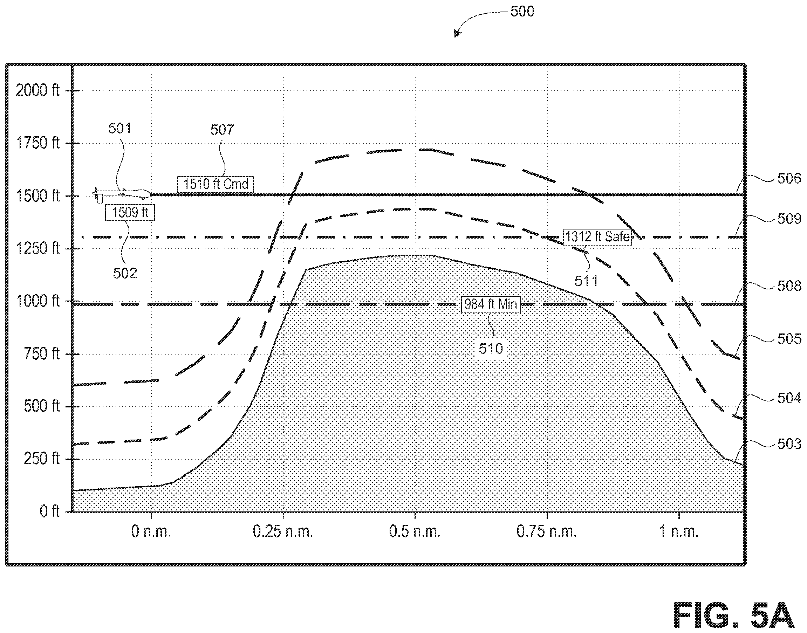

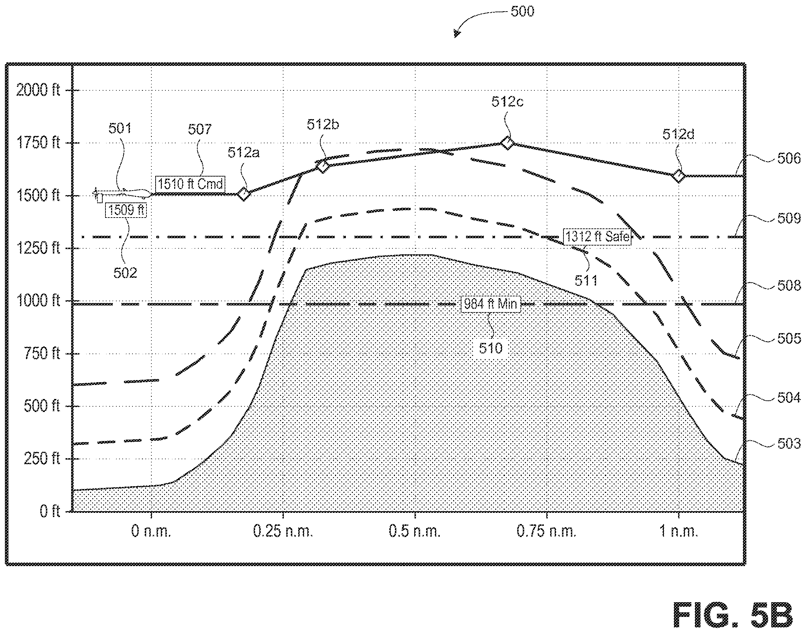

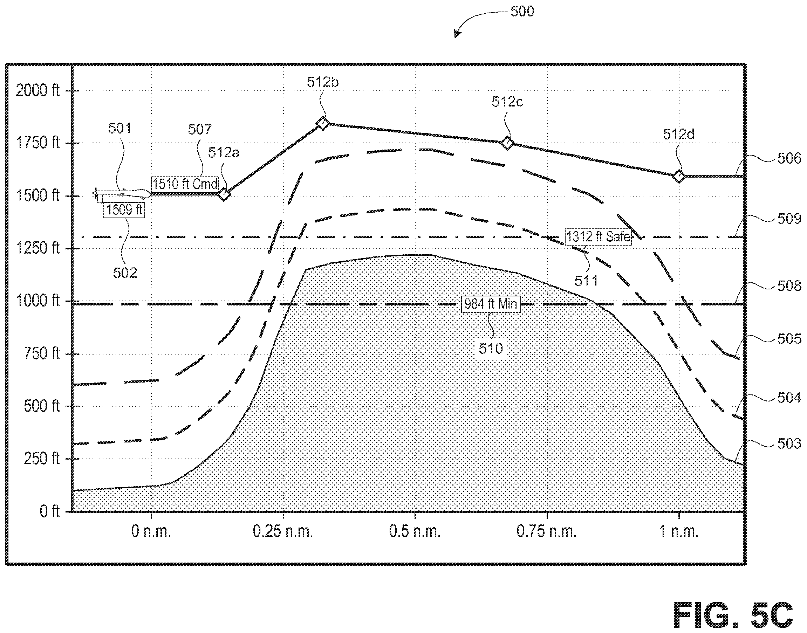

Figure 5A depicts an example of a display 500 that can assist a UAV controller to understand the various altitude zones for the UAV flight, real-time information about the altitude of the UAV, and terrain surrounding the UAV. The display 500 includes a chart with elevation on the vertical axis and distance from the UAV plotted on the horizontal axis. The display 500 includes an icon 501 indicating a current altitude of the UAV. A numerical altitude indicator 502 is also provided near the icon 501 for convenience in determining the current altitude of the UAV. The distance on the horizontal axis is measured starting from the front of the icon 501 of the aircraft such that the horizontal axis measures the distance from the front of the UAV. To accommodate the icon 501, the vertical axis may not cross the horizontal at a different location than the location where zero distance is indicated, as shown in Figure 5.

The display 500 also depicts a profile of terrain 503. The profile of terrain 503 can indicate a profile of the actual terrain along a projected flight path of the UAV. The flight path of the UAV can be a linear flight path (e.g., the UAV is projected to proceed without turning in any direction). In this case, the profile of terrain 503 indicates the terrain immediately in front of the UAV. The flight path of the UAV can also be a non-linear flight path (e.g. the UAV is projected to turn at some point). In this case, the profile of terrain 503 indicates the terrain that will be beneath the projected flight path. Data to develop the profile of terrain 503 can stored locally on a system that is associated with the display 500, such as on a computing device that includes the display 500. The data to develop the profile of terrain 503 can also be obtained from a remote system, such as the NASA Shuttle Radar Topography Mission (SRTM), the USGS Global Multi-resolution Terrain Elevation Data (GMTED), and the like. In the case where data is not available to generate the profile of terrain 503, the display 503 can display a warning that terrain data is not available. In this way, if the display 500 does not show any profile of terrain 503, the warning can help the controller to understand that the data is simply not available instead of the profile of terrain 503 being flat or some other reason.

The profile of terrain 503 depicted in Figure 5 has a contour that can approximate a contour of the terrain along the projected flight path of the UAV. The display 500 also includes a minimum altitude contour line 504, shown as a short dash line, that substantially follows the contour of the profile of terrain 503. The minimum altitude contour line 504 can be located at approximately a first vertical distance from the profile of terrain 503 at any location along the profile of terrain 503. The display 500 also includes a safety altitude contour line 505, shown as a long dash line, that substantially follows the contour of the profile of terrain 503. The safety altitude contour line 505 can be located at approximately a second vertical distance from the profile of terrain 503 at any location along the profile of terrain 503. As shown in Figure 5, the first vertical distance (i.e., the distance of the minimum altitude contour line 504 from the profile of terrain 503) can be less than the second vertical distance (i.e., the distance of the safety altitude contour line 505 from the profile of terrain 503). The safety altitude contour line 505 can represent the safe altitude that the controller of the UAV can command the UAV at any time in the event that there is an error with the UAV.

The display 500 can also include a command projection line 506 showing the altitude of the projected flight path of the UAV. The command projection line 506 can be a horizontal line, such as in the case of the command projection line 506 depicted in Figure 5. When the command projection line 506 is horizontal, it can also be called an orbit line because a line that remains a particular height above the mean sea level could, if permitted to do so, travel around the earth in an orbit of the earth. The command projection line 506 can also follow a projected altitude of a projected flight path of the UAV. A numerical command altitude indicator 507 can also be provided near the command projection line 506 for convenience in displaying the command altitude of the UAV.

The display 500 can also include an overall minimum altitude line 508 and an overall safety altitude line 509. The overall minimum altitude line 508 can indicate a minimum flight level for the entire flight. The overall safety altitude line 509 can indicated a safe altitude for the entire flight at which the controller can command the UAV at any time. As is shown in this display, it is possible for terrain to rise about the overall minimum altitude line 508 set for a flight. If a controller was relying solely on the overall minimum altitude line 508 (i.e., not relying on any indication of the high of the actual terrain), it would be possible for controller to maintain the UAV above the overall minimum altitude line 508 and still have the UAV crash into terrain. The display 500 can also include a numerical overall minimum altitude indicator 510 near the overall minimum altitude line 508 for convenience in displaying the overall minimum altitude of the flight. The display 500 can also include a numerical overall safety altitude indicator 511 near the overall safety altitude line 509 for convenience in displaying the overall safety altitude of the flight.

The display 500 can be part of a user interface that allows a controller to interact with the display 500. In this case, a controller may be able to move certain elements in the display 500 to adjust the display and/or the programming of the UAV. For example, the controller may be able to move minimum altitude contour line 504 up and/or down. Movement of the minimum altitude contour line 504 up and/or down can change the settings for the distance of the minimum altitude contour line 504 from the profile of terrain 503. In another example, the controller may be able to move safety altitude contour line 505 up and/or down to change the settings for the distance of the safety altitude contour line 505 from the profile of terrain 503. In another example, the controller may be able to move the overall minimum altitude line 508 up and/or down to change the settings for the distance of the overall minimum altitude line 508 from the mean sea level. In another example, the controller may be able to move the overall safety altitude line 509 up and/or down to change the settings for the distance of the overall safety altitude line 509 from the mean sea level. In yet another example, the controller may be able to move the command projection line 506. Movement of the command projection line 506 by the controller may not only change the location of the command projection line 506 on the display, but also change the altitude level commands sent to the UAV. Thus, movement of the command projection line 506 in the display 500 can effect a change in the actual altitude of the UAV as it is flying.

Figure 5B depicts another example of display 500. In the example depicted in Figure 5B, the command projection line 506 is not a horizontal line (i.e., not an orbit line). Instead of being a horizontal line, the command projection line 506 includes a number of altitude waypoints 512 located at various altitudes. The waypoints 512 can define that altitude at which the UAV is commanded to be at certain locations along the flight path of the UAV. In the particular example shown in Figure 5B, there are four waypoints 512a-512d that define altitudes at which the UAV is commanded to be at particular locations along the command projection line 506.

The display 500 depicted in Figure 5B can also be part of a user interface that allows a controller to interact with the display 500. In this case, the controller may be able to move any or all of the waypoints 512 to adjust the various altitudes at which the UAV is commanded to be at certain points along the flight path. In the example depicted in Figure 5B, a portion of the command projection line 506 that includes waypoint 512b passes beneath the safety altitude contour line 505. The controller may want to avoid the UAV flying beneath the safety altitude contour line 505. To do so, the controller may drag the waypoint 512b upward to be above the safety altitude contour line 505. Figure 5C depicts an example of display 500 after a controller dragged waypoint 512b above the safety altitude contour line 505. The waypoint 512a in Figure 5C has also been moved to the left from its position in Figure 5B. The waypoint 512a may have been dragged to the left by the controller. A control system may also have moved the waypoint 512a to the left in response to the controller's dragging of the waypoint 512b above the safety altitude contour line 505. The control system may have moved the waypoint 512a to the left to ensure that the rate of climb between waypoint 512a and waypoint 512b does not exceed the operational capabilities or operational limits of the UAV.

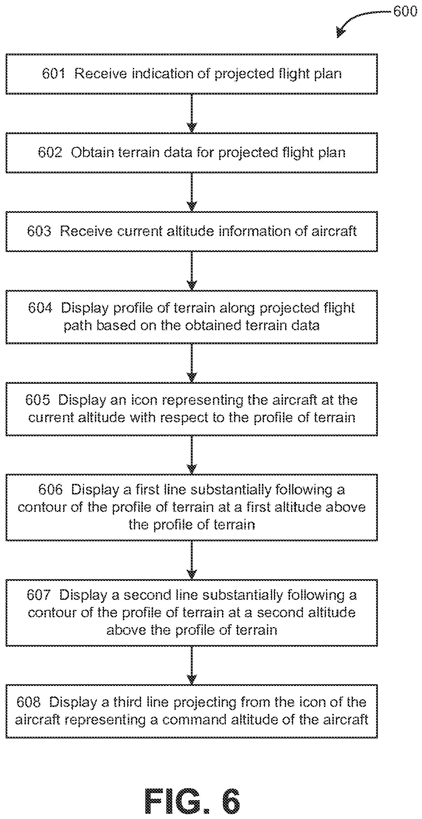

Figure 6 depicts an example of a method 600 of displaying a profile of terrain. At block 601, an indication can be received of a projected flight plan of an aircraft. At block 602, terrain data can be obtained for the projected flight path. At block 603, current altitude information of the aircraft can be received. At block 604, a profile of terrain along the projected flight path can be displayed, where the profile of terrain is passed on the terrain data obtained for the projected flight path. At block 605, an icon representing the aircraft can be displayed at the current altitude with respect to the profile of terrain. At block 606, a first line can be displayed where the first line substantially follows a contour of the profile of terrain at a first altitude above the profile of terrain. At block 607, a second line can be displayed where the second line substantially follows a contour of the profile of terrain at a second altitude above the profile of terrain. At block 608, a third line can be displayed projecting from the icon of the aircraft where the third line represents a command altitude of the aircraft.

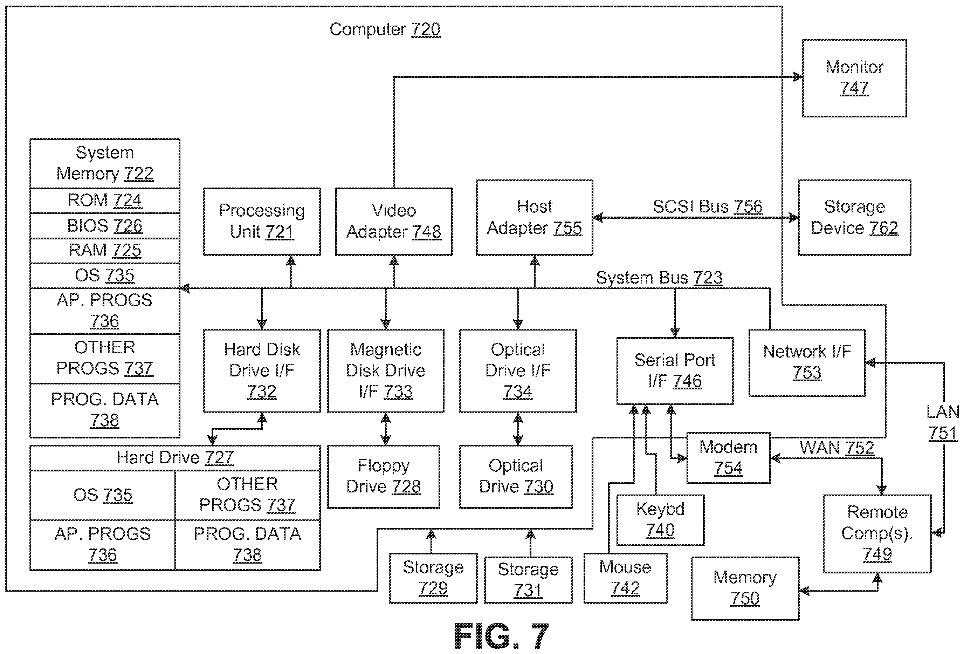

Figure 7 and the following discussion are intended to provide a brief general description of a suitable computing environment in which the methods and systems disclosed herein and/or portions thereof may be implemented. For example, the functions of server 304, laptop 306, desktop 308, flight planning system 302, and database 326 may be performed by one or more devices that include some or all of the aspects described in regard to Figure 7. Some or all of the devices described in Figure 7 that may be used to perform functions of the claimed examples may be configured in other devices and systems such as those described herein. Alternatively, some or all of the devices described in Figure 7 may be included in any device, combination of devices, or any system that performs any aspect of a disclosed example.

Although not required, the methods and systems disclosed herein may be described in the general context of computer-executable instructions, such as program modules, being executed by a computer, such as a client workstation, server or personal computer. Such computer-executable instructions may be stored on any type of computer-readable storage device that is not a transient signal per se. Generally, program modules include routines, programs, objects, components, data structures and the like that perform particular tasks or implement particular abstract data types. Moreover, it should be appreciated that the methods and systems disclosed herein and/or portions thereof may be practiced with other computer system configurations, including hand-held devices, multi-processor systems, microprocessor-based or programmable consumer electronics, network PCs, minicomputers, mainframe computers and the like. The methods and systems disclosed herein may also be practiced in distributed computing environments where tasks are performed by remote processing devices that are linked through a communications network. In a distributed computing environment, program modules may be located in both local and remote memory storage devices.

Figure 7 is a block diagram representing a general purpose computer system in which aspects of the methods and systems disclosed herein and/or portions thereof may be incorporated. As shown, the exemplary general purpose computing system includes computer 720 or the like, including processing unit 721, system memory 722, and system bus 723 that couples various system components including the system memory to processing unit 721. System bus 723 may be any of several types of bus structures including a memory bus or memory controller, a peripheral bus, and a local bus using any of a variety of bus architectures. The system memory may include read-only memory (ROM) 724 and random access memory (RAM) 725. Basic input/output system 726 (BIOS), which may contain the basic routines that help to transfer information between elements within computer 720, such as during start-up, may be stored in ROM 724.

Computer 720 may further include hard disk drive 727 for reading from and writing to a hard disk (not shown), magnetic disk drive 728 for reading from or writing to removable magnetic disk 729, and/or optical disk drive 730 for reading from or writing to removable optical disk 731 such as a CD-ROM or other optical media. Hard disk drive 727, magnetic disk drive 728, and optical disk drive 730 may be connected to system bus 723 by hard disk drive interface 732, magnetic disk drive interface 733, and optical drive interface 734, respectively. The drives and their associated computer-readable media provide non-volatile storage of computer-readable instructions, data structures, program modules and other data for computer 720.

Although the example environment described herein employs a hard disk, removable magnetic disk 729, and removable optical disk 731, it should be appreciated that other types of computer-readable media that can store data that is accessible by a computer may also be used in the exemplary operating environment. Such other types of media include, but are not limited to, a magnetic cassette, a flash memory card, a digital video or versatile disk, a Bernoulli cartridge, a random access memory (RAM), a read-only memory (ROM), and the like.

A number of program modules may be stored on hard disk drive 727, magnetic disk 729, optical disk 731, ROM 724, and/or RAM 725, including an operating system 735, one or more application programs 736, other program modules 737 and program data 738. A user may enter commands and information into the computer 720 through input devices such as a keyboard 740 and pointing device 742. Other input devices (not shown) may include a microphone, joystick, game pad, satellite disk, scanner, or the like. These and other input devices are often connected to the processing unit 721 through a serial port interface 746 that is coupled to the system bus, but may be connected by other interfaces, such as a parallel port, game port, or universal serial bus (USB). A monitor 747 or other type of display device may also be connected to the system bus 723 via an interface, such as a video adapter 448. In addition to the monitor 747, a computer may include other peripheral output devices (not shown), such as speakers and printers. The exemplary system of Figure 7 may also include host adapter 755, Small Computer System Interface (SCSI) bus 756, and external storage device 762 that may be connected to the SCSI bus 756.

The computer 720 may operate in a networked environment using logical and/or physical connections to one or more remote computers or devices, such as remote computer 749, that may represent any of server 304, laptop 306, desktop 308, flight planning system 302, and database 326. Each of server 304, laptop 306, desktop 308, flight planning system 302, and database 326 may be any device as described herein capable of performing the determination and display of zero fuel time data and return to base time data. Remote computer 749 may be a personal computer, a server, a router, a network PC, a peer device or other common network node, and may include many or all of the elements described above relative to the computer 720, although only a memory storage device 750 has been illustrated in Figure 7. The logical connections depicted in Figure 7 may include local area network (LAN) 751 and wide area network (WAN) 752. Such networking environments are commonplace in police and military facilities, offices, enterprise-wide computer networks, intranets, and the Internet.

When used in a LAN networking environment, computer 720 may be connected to LAN 751 through network interface or adapter 753. When used in a WAN networking environment, computer 720 may include modem 754 or other means for establishing communications over wide area network 752, such as the Internet. Modem 754, which may be internal or external, may be connected to system bus 723 via serial port interface 746. In a networked environment, program modules depicted relative to computer 720, or portions thereof, may be stored in a remote memory storage device. It will be appreciated that the network connections shown are exemplary and other means of establishing a communications link between computers may be used.

Computer 720 may include a variety of computer-readable storage media. Computer-readable storage media can be any available tangible, non-transitory, or non-propagating media that can be accessed by computer 720 and includes both volatile and nonvolatile media, removable and non-removable media. By way of example, and not limitation, computer-readable media may comprise computer storage media and communication media. Computer storage media include volatile and nonvolatile, removable and non-removable media implemented in any method or technology for storage of information such as computer-readable instructions, data structures, program modules or other data. Computer storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible medium that can be used to store the desired information and that can be accessed by computer 720. Combinations of any of the above should also be included within the scope of computer-readable media that may be used to store source code for implementing the methods and systems described herein. Any combination of the features or elements disclosed herein may be used in one or more examples.

Conditional language used herein, such as, among others, "can," "could," "might," "may," "e.g.," and the like, unless specifically stated otherwise, or otherwise understood within the context as used, is generally intended to convey that certain examples include, while other examples do not include, certain features, elements, and/or steps. Thus, such conditional language is not generally intended to imply that features, elements and/or steps are in any way required for one or more examples or that one or more examples necessarily include logic for deciding, with or without author input or prompting, whether these features, elements and/or steps are included or are to be performed in any particular example. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

In general, the various features and processes described above may be used independently of one another, or may be combined in different ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed examples. The example systems and components described herein may be configured differently than described. For example, elements may be added to, removed from, or rearranged compared to the disclosed examples.

While certain example or illustrative examples have been described, these examples have been presented by way of example only, and are not intended to limit the scope of the inventions disclosed herein. Indeed, the novel methods and systems described herein may be embodied in a variety of other forms. The accompanying claims and their equivalents are intended to cover such forms or modifications as would fall within the scope of certain of the inventions disclosed herein.

## Claims

1. A method of displaying information about an unmanned air vehicle (UAV, 318) to assist a UAV controller, the method comprising:
displaying a profile of terrain (503) for a projected flight path of a UAV;
displaying a first line (504) at a first altitude above the profile of terrain, the first line substantially following a contour of the profile of terrain, wherein the first line (504) represents a minimum altitude;
displaying a second line (505) at a second altitude above the profile of terrain, the second line substantially following the contour of the profile of terrain, wherein the second line (505) represents a safety altitude which is greater than the minimum altitude, and which represents an altitude which is deemed to be safe for operation of the UAV;
displaying an icon (501) representing an altitude of the UAV (318) with respect to the profile of terrain; and
displaying a third line (506) representing a command altitude for the projected flight path, the third line projecting from the icon (501).

2. The method of claim 1, further comprising:
displaying a numerical command altitude indicator (502) near the third line (506), the numerical command indicator (502) indicating the command altitude for the projected flight path.

3. The method of any of the preceding claims, further comprising:
displaying a numerical altitude indicator (511) near the first line (504), the numerical altitude indicator indicating an altitude of the first line at a point along the projected flight path.

4. The method of any of the preceding claims, further comprising:
displaying a fourth line (508) representing an overall minimum altitude of the UAV.

5. The method of any of the preceding claims, further comprising:
receiving an input indicative of a movement of the third line (506) in the display (500);
changing a location of the third line (506) in the display (500) based on the input; and
controlling a command altitude of the UAV (318) based on the input.

6. The method of any of the preceding claims, wherein the third line (506) representing the command altitude comprises one or more waypoints (512a, 512b, 512c, 512d).

7. The method of claim 6, further comprising:
receiving an input indicative of a movement of at least one of the one or more waypoints (512a, 512b, 512c, 512d) in the display (500);
changing a location of the one or more waypoints (512a, 512b, 512c, 512d) in the display (500) based on the input; and
controlling a command altitude of the UAV (318) based on the input.

8. A computer-readable storage medium having stored thereon computer-executable instructions for displaying information about UAV (318), that when said instructions are executed by a computer, cause the computer to perform the method of any of claims 1 to 7.

9. A system for displaying information about an unmanned air vehicle (UAV) to assist a UAV controller, the system comprising:
a display (500);
at least one processor (310); and
a computer readable storage medium (314) having instructions stored thereon, the instructions comprising instructions that, when executed by the at least one processor (310), cause the system to:
display, on the display (500), a profile of terrain (503) for a projected flight path of a UAV (318);
display, on the display (500), a first line (504) at a first altitude above the profile of terrain, the first line (504) substantially following a contour of the profile of terrain and representing a minimum altitude;
display, on the display (500), a second line (505) at a second altitude above the profile of terrain, the second line substantially following the contour of the profile of terrain and representing a safety altitude which is greater than the minimum altitude, and which represents an altitude which is deemed to be safe for operation of the UAV;
display, on the display (500), an icon (501) representing an altitude of the UAV (318) with respect to the profile of terrain; and
display, on the display (500), a third line (506) representing a command altitude for the projected flight path, the third line (506) projecting from the icon (301).

10. The system of claim 9, wherein the instructions further comprise instructions that, when executed by the at least one processor, cause the system to:
display, on the display (500), a numerical command altitude indicator (502) near the third line (506), the numerical command indicator (502) indicating the command altitude for the projected flight path;
display, on the display (500), a numerical altitude indicator (511) near the first line (504), the numerical altitude indicator (511) indicating an altitude of the first line at a point along the projected flight path; and
display, on the display (500), a fourth line (508) representing an overall minimum altitude of the UAV.

11. The system of claim 9 or 10, further comprising:
receiving an input indicative of a movement of the third line (506) in the display (500);
changing a location of the third line (506) in the display (500) based on the input; and
controlling a command altitude of the UAV (318) based on the input.

12. The system of claim 9, 10 or 11, wherein the third line (506) representing the command altitude comprises one or more waypoints (512a, 512b, 512c, 512d), and wherein the instructions further comprise instructions that, when executed by the at least one processor, cause the system to:
receive an input indicative of a movement of at least one of the one or more waypoints (512a, 512b, 512c, 512d) in the display (500);
change a location of the one or more waypoints (512a, 512b, 512c, 512d) in the display (500) based on the input; and
control a command altitude of the UAV (318) based on the input.

## Patentansprüche

1. Verfahren zum Anzeigen von Informationen über ein unbemanntes Luftfahrzeug (UAV, Unmanned Air Vehicle, 318) zur Unterstützung eines Steuerers des UAV, wobei das Verfahren Folgendes umfasst:
Anzeigen des Profils eines Geländes (503) für eine vorgesehene Flugroute eines UAV;
Anzeigen einer ersten Linie (504) auf einer ersten Höhe über dem Profil des Geländes, wobei die erste Linie im Wesentlichen einer Kontur des Profils des Geländes folgt, wobei die erste Linie (504) eine Mindesthöhe darstellt;
Anzeigen einer zweiten Linie (505) auf einer zweiten Höhe über dem Profil des Geländes, wobei die zweite Linie im Wesentlichen der Kontur des Profils des Geländes folgt, wobei die zweite Linie (505) eine Sicherheitshöhe darstellt, die größer als die Mindesthöhe ist und die eine Höhe darstellt, die als sicher für den Betrieb des UAV eingestuft wird;
Anzeigen eines Symbols (501), das eine Höhe des UAV (318) in Bezug auf das Profil des Geländes darstellt; und
Anzeigen einer dritten Linie (506), die eine Befehlshöhe für die vorgesehene Flugroute darstellt,
wobei die dritte Linie von dem Symbol (501) hervorsteht.

2. Verfahren nach Anspruch 1, das weiterhin Folgendes umfasst:
Anzeigen eines numerischen Befehlshöhenindikators (502) in der Nähe der dritten Linie (506),
wobei der numerische Befehlshöhenindikator (502) die Befehlshöhe für die vorgesehene Flugroute angibt.

3. Verfahren nach einem der vorhergehenden Ansprüche, das weiterhin Folgendes umfasst:
Anzeigen eines numerischen Höhenindikators (511) in der Nähe der ersten Linie (504), wobei der numerische Höhenindikator eine Höhe der ersten Linie an einem Punkt entlang der vorgesehenen Flugroute angibt.

4. Verfahren nach einem der vorhergehenden Ansprüche, das weiterhin Folgendes umfasst:
Anzeigen einer vierten Linie (508), die eine Gesamt-Mindesthöhe des UAV darstellt.

5. Verfahren nach einem der vorhergehenden Ansprüche, das weiterhin Folgendes umfasst:
Empfangen einer Eingabe, die eine Bewegung der dritten Linie (506) auf der Anzeige (500) angibt;
Ändern einer Position der dritten Linie (506) auf der Anzeige (500) basierend auf der Eingabe; und
Steuern einer Befehlshöhe des UAV (318) basierend auf der Eingabe.

6. Verfahren nach einem der vorhergehenden Ansprüche, wobei die dritte Linie (506), welche die Befehlshöhe darstellt, einen oder mehrere Wegpunkte (512a, 512b, 512c, 512d) umfasst.

7. Verfahren nach Anspruch 6, das weiterhin Folgendes umfasst:
Empfangen einer Eingabe, die eine Bewegung wenigstens eines der einen oder mehreren Wegpunkte (512a, 512b, 512c, 512d) auf der Anzeige (500) angibt;
Ändern einer Position des einen oder der mehreren Wegpunkte (512a, 512b, 512c, 512d) auf der Anzeige (500) basierend auf der Eingabe; und
Steuern einer Befehlshöhe des UAV (318) basierend auf der Eingabe.

8. Computerlesbares Speichermedium, auf dem computerausführbare Anweisungen zum Anzeigen von Informationen über ein UAV (318) gespeichert sind, die, wenn die Anweisungen von einem Computer ausgeführt werden, bewirken, dass der Computer das Verfahren nach einem der Ansprüche 1 bis 7 ausführt.

9. System zum Anzeigen von Informationen über ein unbemanntes Luftfahrzeug (UAV, Unmanned Air Vehicle) zur Unterstützung eines Steuerers des UAV, wobei das System Folgendes umfasst:
eine Anzeige (500);
wenigstens einen Prozessor (310); und
ein computerlesbares Speichermedium (314), auf dem Anweisungen gespeichert sind, wobei die Anweisungen Anweisungen umfassen, die, wenn sie von dem wenigstens einen Prozessor (310) ausgeführt werden, das System zu Folgendem veranlassen:
auf der Anzeige (500) Anzeigen des Profils eines Geländes (503) für eine vorgesehene Flugroute eines UAV (318);
auf der Anzeige (500) Anzeigen einer ersten Linie (504) auf einer ersten Höhe über dem Profil des Geländes, wobei die erste Linie (504) im Wesentlichen einer Kontur des Profils des Geländes folgt und eine Mindesthöhe darstellt;
auf der Anzeige (500) Anzeigen einer zweiten Linie (505) auf einer zweiten Höhe über dem Profil des Geländes, wobei die zweite Linie im Wesentlichen der Kontur des Profils des Geländes folgt und eine Sicherheitshöhe darstellt, die größer als die Mindesthöhe ist und die eine Höhe darstellt, die als sicher für den Betrieb des UAV eingestuft wird;
auf der Anzeige (500) Anzeigen eines Symbols (501), das eine Höhe des UAV (318) in Bezug auf das Profil des Geländes darstellt; und
auf der Anzeige (500) Anzeigen einer dritten Linie (506), die eine Befehlshöhe für die vorgesehene Flugroute darstellt, wobei die dritte Linie (506) von dem Symbol (301) hervorsteht.

10. System nach Anspruch 9, wobei die Anweisungen weiterhin Anweisungen umfassen, die, wenn sie von dem wenigstens einen Prozessor ausgeführt werden, das System zu Folgendem veranlassen:
auf der Anzeige (500) Anzeigen eines numerischen Befehlshöhenindikators (502) in der Nähe der dritten Linie (506), wobei der numerische Befehlshöhenindikator (502) die Befehlshöhe für die vorgesehene Flugroute angibt;
auf der Anzeige (500) Anzeigen eines numerischen Höhenindikators (511) in der Nähe der ersten Linie (504), wobei der numerische Höhenindikator (511) eine Höhe der ersten Linie an einem Punkt entlang der vorgesehenen Flugroute angibt; und
auf der Anzeige (500) Anzeigen einer vierten Linie (508), die eine Gesamt-Mindesthöhe des UAV darstellt.

11. System nach Anspruch 9 oder 10, das weiterhin Folgendes umfasst:
Empfangen einer Eingabe, die eine Bewegung der dritten Linie (506) auf der Anzeige (500) angibt;
Ändern einer Position der dritten Linie (506) auf der Anzeige (500) basierend auf der Eingabe; und
Steuern einer Befehlshöhe des UAV (318) basierend auf der Eingabe.

12. System nach Anspruch 9, 10 oder 11, wobei die dritte Linie (506), welche die Befehlshöhe darstellt, einen oder mehrere Wegpunkte (512a, 512b, 512c, 512d) umfasst, und wobei die Anweisungen weiterhin Anweisungen umfassen, die, wenn sie von dem wenigstens einen Prozessor ausgeführt werden, das System zu Folgendem veranlassen:
Empfangen einer Eingabe, die eine Bewegung wenigstens eines der einen oder mehreren Wegpunkte (512a, 512b, 512c, 512d) auf der Anzeige (500) angibt;
Ändern einer Position des einen oder der mehreren Wegpunkte (512a, 512b, 512c, 512d) auf der Anzeige (500) basierend auf der Eingabe; und
Steuern einer Befehlshöhe des UAV (318) basierend auf der Eingabe.

## Revendications

1. Procédé d'affichage d'informations concernant un aéronef non habité (UAV [unmanned air vehicle], 318) pour l'assistance d'un pilote d'UAV, le procédé comprenant :
l'affichage du profil d'un terrain (503) relatif à une trajectoire de vol prévue d'un UAV,
l'affichage d'une première ligne (504) à une première altitude au-dessus du profil du terrain, la première ligne suivant sensiblement le contour du profil du terrain, ladite première ligne (504) représentant une altitude minimale,
l'affichage d'une deuxième ligne (505) à une deuxième altitude au-dessus du profil du terrain, la deuxième ligne suivant sensiblement le contour du profil du terrain, ladite deuxième ligne (505) représentant une altitude de sécurité supérieure à l'altitude minimale et constituant une altitude considérée sûre pour l'exploitation de l'UAV,
l'affichage d'une icône (501) représentant l'altitude de l'UAV (318) par rapport au profil du terrain, et
l'affichage d'une troisième ligne (506) représentant une altitude de commande relative à la trajectoire de vol prévue, la troisième ligne partant de l'icône (501).

2. Procédé selon la revendication 1, comprenant en outre :
l'affichage d'un indicateur chiffré d'altitude de commande (502) à proximité de la troisième ligne (506), l'indicateur chiffré de commande (502) indiquant l'altitude de commande relative à la trajectoire de vol prévue.

3. Procédé selon l'une quelconque des revendications précédentes, comprenant en outre :
l'affichage d'un indicateur chiffré d'altitude (511) à proximité de la première ligne (504),
l'indicateur chiffré d'altitude indiquant l'altitude de la première ligne en un point présent sur la trajectoire de vol prévue.

4. Procédé selon l'une quelconque des revendications précédentes, comprenant en outre :
l'affichage d'une quatrième ligne (508) représentant une altitude minimale globale de l'UAV.

5. Procédé selon l'une quelconque des revendications précédentes, comprenant en outre :
la réception d'une entrée indicative d'un décalage de la troisième ligne (506) à l'écran (500),
le changement de la position de la troisième ligne (506) à l'écran (500) compte tenu de l'entrée, et
le réglage d'une altitude de commande de l'UAV (318) compte tenu de l'entrée.

6. Procédé selon l'une quelconque des revendications précédentes, dans lequel la troisième ligne (506) représentant l'altitude de commande comprend un ou plusieurs points de cheminement (512a, 512b, 512c, 512d).

7. Procédé selon la revendication 6, comprenant en outre :
la réception d'une entrée indicative d'un décalage d'au moins un des un ou plusieurs points de cheminement (512a, 512b, 512c, 512d) à l'écran (500),
le changement de la position des un ou plusieurs points de cheminement (512a, 512b, 512c, 512d) à l'écran (500) compte tenu de l'entrée, et
le réglage d'une altitude de commande de l'UAV (318) compte tenu de l'entrée.

8. Support d'enregistrement lisible par ordinateur sur lequel sont enregistrées des instructions exécutables par un ordinateur pour afficher des informations concernant l'UAV (318) qui, lorsqu'elles sont exécutées par un ordinateur, amènent l'ordinateur à mettre en œuvre le procédé selon l'une quelconque des revendications 1 à 7.

9. Système d'affichage d'informations concernant un aéronef non habité (UAV, unmanned air vehicle) pour l'assistance d'un pilote d'UAV, le système comprenant :
un écran (500),
au moins un processeur (310), et
un support d'enregistrement (314) lisible par ordinateur sur lequel sont enregistrées des instructions, lesdites instructions comprenant des instructions qui, lorsqu'elles sont exécutées par l'au moins un processeur (310), amènent le système à :
afficher, sur l'écran (500), le profil d'un terrain (503) relatif à une trajectoire de vol prévue d'un UAV (318),
afficher, sur l'écran (500), une première ligne (504) à une première altitude au-dessus du profil du terrain, la première ligne (504) suivant sensiblement le contour du profil du terrain et représentant une altitude minimale,
afficher, sur l'écran (500), une deuxième ligne (505) à une deuxième altitude au-dessus du profil du terrain, la deuxième ligne suivant sensiblement le contour du profil du terrain et représentant une altitude de sécurité supérieure à l'altitude minimale et constituant une altitude considérée sûre pour l'exploitation de l'UAV,
afficher, sur l'écran (500), une icône (501) représentant l'altitude de l'UAV (318) par rapport au profil du terrain, et
afficher, sur l'écran (500), une troisième ligne (506) représentant une altitude de commande relative à la trajectoire de vol prévue, la troisième ligne (506) partant de l'icône (301).

10. Système selon la revendication 9, dans lequel les instructions comprennent en outre des instructions qui, lorsqu'elles sont exécutées par l'au moins un processeur, amènent le système à :
afficher, sur l'écran (500), un indicateur chiffré d'altitude de commande (502) à proximité de la troisième ligne (506), l'indicateur chiffré de commande (502) indiquant l'altitude de commande relative à la trajectoire de vol prévue,
afficher, sur l'écran (500), un indicateur chiffré d'altitude (511) à proximité de la première ligne (504), l'indicateur chiffré d'altitude (511) indiquant l'altitude de la première ligne en un point présent sur la trajectoire de vol prévue, et
afficher, sur l'écran (500), une quatrième ligne (508) représentant une altitude minimale globale de l'UAV.

11. Système selon la revendication 9 ou 10, comprenant en outre :
la réception d'une entrée indicative d'un décalage de la troisième ligne (506) à l'écran (500),
le changement de la position de la troisième ligne (506) à l'écran (500) compte tenu de l'entrée, et
le réglage d'une altitude de commande de l'UAV (318) compte tenu de l'entrée.

12. Système selon la revendication 9, 10 ou 11, dans lequel la troisième ligne (506) représentant l'altitude de commande comprend un ou plusieurs points de cheminement (512a, 512b, 512c, 512d), et dans lequel les instructions comprennent en outre des instructions qui, lorsqu'elles sont exécutées par l'au moins un processeur, amènent le système à :
recevoir une entrée indicative d'un décalage d'au moins un des un ou plusieurs points de cheminement (512a, 512b, 512c, 512d) à l'écran (500),
changer la position des un ou plusieurs points de cheminement (512a, 512b, 512c, 512d) à l'écran (500) compte tenu de l'entrée, et
régler une altitude de commande de l'UAV (318) compte tenu de l'entrée.
